# EUROPEAN PATENT APPLICATION

(11) **EP 4 484 483 A1**
(43) Date of publication of application: **01.01.2025**
(21) Application number: 23760419.4
(22) Date of filing: 24.02.2023
(51) Int. Cl.: C08K 5/00, C08K 5/10, C08K 5/101, C08L 67/02, C08L 101/00

(54) **PLASTICIZER COMPOSITION AND RESIN COMPOSITION COMPRISING SAME**

(30) Priority: 25.02.2022 KR 20220024952
(71) Applicant: LG Chem, Ltd., Yeongdeungpo-gu Seoul 07336 (KR)
(72) Inventor: KIM, Hyun Kyu, Daejeon 34122 (KR); WOO, Seung Taek, Daejeon 34122 (KR); KIM, Joo Ho, Daejeon 34122 (KR); KIM, Eun Suk, Daejeon 34122 (KR)
(74) Representative: Goddar, Heinz J.
(86) International application number: PCT/KR2023/002665
(87) International publication number: WO 2023/163545

(57) **Abstract**

The present invention relates to a plasticizer composition including 2-ethylhexyl(2-hydroxyethyl) terephthalate and di(2-ethylhexyl) terephthalate, wherein the content of the 2-ethylhexyl(2-hydroxyethyl) terephthalate is 20 wt% or less based on the total plasticizer composition, and when the plasticizer composition is applied to a resin, mechanical properties, migration resistance, and loss properties may be improved.

## Description

### TECHNICAL FIELD

### Cross-reference to Related Applications

This application claims the benefit of Korean Patent Application No. 10-2022-0024952, filed on February 25, 2022, in the Korean Intellectual Property Office, the disclosure of which is incorporated herein in its entirety by reference.

### Technical Field

The present invention relates to a plasticizer composition including 2-ethylhexyl(2-hydroxyethyl) terephthalate and di(2-ethylhexyl) terephthalate, and a resin composition including the plasticizer composition.

### BACKGROUND ART

Typically, in a plasticizer, an alcohol reacts with a polycarboxylic acid such as phthalic acid and adipic acid to form a corresponding ester. In addition, in consideration of domestic and international regulations on phthalate-based plasticizers which are harmful to the human body, studies have continued on plasticizer compositions which can replace phthalate-based plasticizers, such as terephthalate-based, adipate-based, and other polymer-based plasticizers.

Meanwhile, in all of the plastisol industry, car-rendering industry, or extrusion/injection compound industry that manufactures finished products such as flooring, wallpaper, soft and hard sheets, gloves, wires, hoses, films, etc., the demand for such eco-friendly products is increasing, and in order to enhance the quality characteristics, processability, and productivity of each finished product, appropriate plasticizers should be used in consideration of discoloration, migration, mechanical properties, etc.

In these various areas of use, according to the characteristics required by each industry, such as tensile strength, elongation, light resistance, migration, gelling, or absorption rate, etc., auxiliary raw materials and the like such as a plasticizer, a filler, a stabilizer, a viscosity reducing agent, a dispersant, an anti-foaming agent, a foaming agent, etc. are mixed in a PVC resin.

For example, among plasticizer compositions applicable to PVC, when di(2-ethylhexyl) terephthalate (DEHTP), which is relatively inexpensive and most universally used, is applied, the hardness or sol viscosity is high, the absorption rate of a plasticizer is relatively slow, and the migration and stress degradation are not good.

In order to make an improvement thereon, as a composition containing DEHTP, it is possible to consider applying a product of a trans-esterification reaction with butanol as a plasticizer, but while the plasticization efficiency is improved, the mechanical properties are somewhat lowered, and there is an endemic problem in that the plasticizer is leaked by heat or physical force.

In addition, securing eco-friendliness has become very important recently, and not only securing eco-friendliness of a final product itself, but also securing eco-friendliness in the supply and demand of raw materials and processes are very important in the industry, but due to the conflict of interest with securing cost competitiveness, which is the first task in the industry, there is a need to develop products that are eco-friendly in terms of raw materials, preparation processes, and final products, and also cost-competitive.

### DISCLOSURE OF THE INVENTION

### TECHNICAL PROBLEM

The present invention is to provide an eco-friendly plasticizer composition which is not toxic to reproductive development while having performance equal to or higher than that of a typical phthalate-based plasticizer by applying a composition including 2-ethylhexyl(2-hydroxyethyl) terephthalate and di(2-ethylhexyl) terephthalate, which are obtainable during a decomposition process of polyethylene terephthalate, to a plasticizer.

In addition, the present invention is to provide a method for preparing a plasticizer composition, the method capable of preparing a plasticizer composition having excellent physical properties economically and eco-friendly by using discarded polyethylene terephthalate as a raw material.

### TECHNICAL SOLUTION

In order to solve the above problem, the present invention provides a plasticizer composition, a method for preparing the same, and a resin composition including the plasticizer composition.
(1) The present invention provides a plasticizer composition including 2-ethylhexyl(2-hydroxyethyl) terephthalate, and di(2-ethylhexyl) terephthalate, wherein the content of the 2-ethylhexyl(2-hydroxyethyl) terephthalate is 20 wt% or less based on the total plasticizer composition.
(2) In (1) above, the present invention provides a plasticizer composition, wherein the content of 2-ethylhexyl(2-hydroxyethyl) terephthalate is 0.01 wt% to 15 wt%.
(3) In (1) or (2) above, the present invention provides a plasticizer composition, wherein the weight ratio between the 2-ethylhexyl(2-hydroxyethyl) terephthalate and the di(2-ethylhexyl) terephthalate is 1:3 to 10000.
(4) In any one of (1) to (3) above, the present invention provides a plasticizer composition, wherein the weight ratio between the 2-ethylhexyl(2-hydroxyethyl) terephthalate and the di(2-ethylhexyl) terephthalate is 1:5 to 1000.
(5) In any one of (1) to (4) above, the present invention provides a plasticizer composition further including any one or more among dimer compounds represented by Formulas 1 to 3 below. 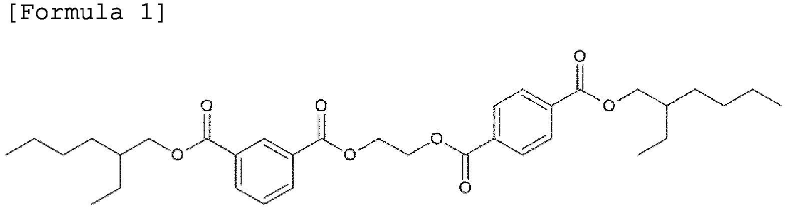 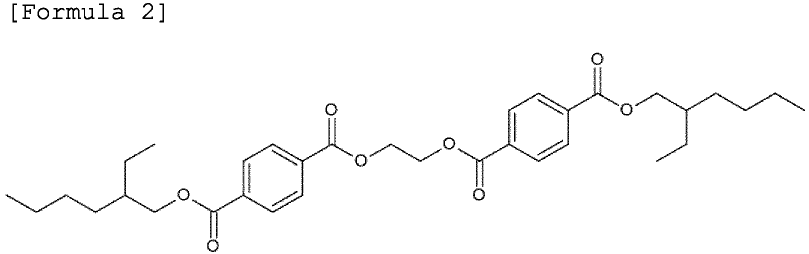 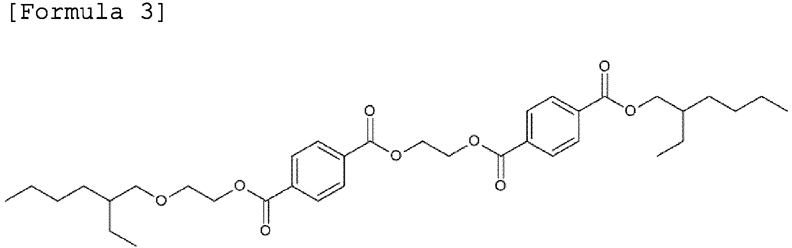
(6) In (5) above, the present invention provides a plasticizer composition, wherein the total content of the dimer compound in the composition is 2 wt% to 20 wt%.
(7) In (5) or (6) above, the present invention provides a plasticizer composition, wherein the content of the dimer compound represented by Formula 1 above in the composition is 0.01 wt% to 1 wt%.
(8) In any one of (5) to (7) above, the present invention provides a plasticizer composition, wherein the content of the dimer compound represented by Formula 3 above in the composition is 0.3 wt% to 2.5 wt%.
(9) In any one of (5) to (8) above, the present invention provides a plasticizer composition, wherein the weight ratio between the dimer compound and the 2-ethylhexyl(2-hydroxyethyl) terephthalate in the composition is 1:0.001 to 5.
(10) In any one of (5) to (9) above, the present invention provides a plasticizer composition, wherein the weight ratio between the dimer compound and the di(2-ethylhexyl) terephthalate in the composition is 1:2.0 to 99.0.
(11) The present invention provides a method for preparing a plasticizer composition, wherein the method includes a step of mixing polyethylene terephthalate and 2-ethylhexanol in the presence of a catalyst to perform a trans-esterification reaction, wherein a product of the trans-esterification reaction includes 2-ethylhexyl(2-hydroxyethyl) terephthalate and di(2-ethylhexyl) terephthalate.
(12) In (11) above, the present invention provides a method for preparing a plasticizer composition, wherein the polyethylene terephthalate is mixed in an amount of 80 wt% or less with respect to the sum of contents of polyethylene terephthalate and 2-ethylhexanol.
(13) In any one of (11) or (12) above, the present invention provides a method for preparing a plasticizer composition, wherein the polyethylene terephthalate includes discarded and recycled polyethylene terephthalate.
(14) The present invention provides a resin composition including 100 parts by weight of a resin, and 5 parts by weight to 150 parts by weight of a plasticizer composition according to any one among (1) to (10).
(15) In (14) above, the present invention provides a resin composition, wherein the resin is one or more selected from the group consisting of a straight vinyl chloride polymer, a paste vinyl chloride polymer, an ethylene vinyl acetate copolymer, an ethylene polymer, a propylene polymer, polyketone, polystyrene, polyurethane, polylactic acid, natural, and synthetic rubber.

### ADVANTAGEOUS EFFECTS

A plasticizer composition according to an embodiment of the present invention is an eco-friendly material which is not toxic to reproductive development, and may improve mechanical properties, migration resistance, stress migration, and absorption rate when used in a resin composition, compared to a typical plasticizer, and such a top-down preparation method utilizes waste, and thus is an eco-friendly preparation method, and at the same time, may have very excellent cost competitiveness.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

### Definition of terms

The term "composition" as used herein includes not only a reaction product and a decomposition product formed from materials of a corresponding composition, but also a mixture of materials including the corresponding composition.

As used herein, a "straight vinyl chloride polymer" is one of the types of vinyl chloride polymers, which is polymerized through suspension polymerization, bulk polymerization, or the like. The polymer is a porous particle with multiple pores, and has a size of tens to hundreds of micrometers, has no cohesiveness, and has excellent flowability.

As used herein, a "paste vinyl chloride polymer" is one of the types of vinyl chloride polymers, which is polymerized through micro-suspension polymerization, microseed polymerization, or emulsion polymerization, or the like. The polymer is a fine and dense particle with no pores, and has a size of tens to thousands of nanometers, has cohesiveness, and has poor flowability.

The terms 'including' and 'having,' and derivatives thereof, whether they are specifically disclosed or not, do not intend to exclude the presence of any additional components, steps or procedures. In order to avoid any uncertainty, all compositions claimed through the use of the term 'including' may include any additional additives, supplements, or compounds, whether they are polymers or others, unless otherwise stated. In contrast, the term 'consisting essentially of' excludes any other components, steps, or procedures from the scope of any subsequent description, except that it is not essential to operability. The term 'consisting of' excludes any components, steps or procedures which are not specifically stated or listed.

### Measurement methods

In the present specification, the content analysis of components in a composition is performed through gas chromatography measurement, and the analysis is performed using a gas chromatography device of Agilent (product name: Agilent 7890 GC, column: HP-5, carrier gas: helium (flow rate 2.4 mL/min), detector: F.I.D, injection volume: 1 uL, initial value: 70 °C/4.2 min, end value: 280 °C/7.8 min, program rate: 15°C/min) .

In the present specification, a 'tensile strength' is calculated by Equation 1 below after measuring a point at which a specimen is cut after pulling the specimen at a cross head speed of 200 mm/min (1T) using a U.T.M (manufacturer; Instron, model name; 4466), which is a test device, by the ASTM D638 method. Tensile strength (kgf/cm2) = load value (kgf) / thickness (cm) x width (cm)

In the present specification, an `elongation rate' is calculated by Equation 2 below after measuring a point at which a specimen is cut after pulling the specimen at a cross head speed of 200 mm/min (1T) using the U.T.M by the ASTM D638 method. Elongation rate (%) = length after elongation / initial length x 100

In the present specification, a 'migration loss' may be measured according to KSM-3156. Specifically, a test piece having a thickness of 1 mm is obtained, and an absorption sheet capable of moving to both sides of the test piece, thereby absorbing an organic material discharged to the surface of the test piece is added, and then a plate which is able to cover the entire test body is attached thereon to apply a load of 1 kgf/cm². The test piece is left to stand for 72 hours in a hot-air circulation-type oven (80 °C), and then is taken out of the oven and cooled for 4 hours at room temperature. Thereafter, the plate and the absorption sheet attached to both sides of the test piece are removed, and then the weights of the specimen before and after the specimen is left in the oven are measured to calculate a migration loss amount by Equation 3 below. Migration loss amount (%) = {[(initial specimen weight) - (specimen weight after being left to stand in oven)] / (initial specimen weight)} x 100

In the present specification, a 'volatile loss' is obtained by working on a specimen at 80 °C for 72 hours, and then measuring the weight of the specimen. Volatile loss (%) = {[(initial specimen weight) - (specimen weight after work)] / initial specimen weight)} x 100

In the case of the above various measurement conditions, detailed conditions such as temperature, rotation speed, time, and the like may be slightly different depending on a case, and when detailed conditions are different, measurement methods and conditions thereof are specified separately.

In the present specification, an 'absorption rate' is evaluated, under the conditions of 77 °C and 60 rpm, by measuring the time taken from when a resin and a plasticizer were mixed with each other using a planetary mixer (Brabender, P600) until when the torque of the mixer is stabilized.

In the case of the above various measurement conditions, detailed conditions such as temperature, rotation speed, time, and the like may be slightly different depending on a case, and when detailed conditions are different, measurement methods and conditions thereof are specified separately.

Hereinafter, the present invention will be described in more detail to facilitate understanding of the present invention.

### Plasticizer composition

The present invention provides a plasticizer composition including 2-ethylhexyl(2-hydroxyethyl) terephthalate, and di(2-ethylhexyl) terephthalate, wherein the content of the 2-ethylhexyl(2-hydroxyethyl) terephthalate is 20 wt% or less based on the total plasticizer composition.

The plasticizer composition including 2-ethylhexyl(2-hydroxyethyl) terephthalate and di(2-ethylhexyl) terephthalate may be obtained from a product produced by a trans-esterification reaction between polyethylene terephthalate (hereinafter, PET) and 2-ethylhexanol.

In general, as a means for obtaining di(2-ethylhexyl) terephthalate utilized as a typical general-purpose plasticizer, there is a case in that PET and 2-ethylhexanol are reacted with each other, but there are problems in that a large amount of by-products is generated, and it is not easy to separate bis(2-hydroxyethyl) terephthalate or 2-ethylhexyl(2-hydroxyethyl) terephthalate, which is produced during the reaction process, from di(2-ethylhexyl) terephthalate. In addition, bis(2-hydroxyethyl) terephthalate and 2-ethylhexyl(2-hydroxyethyl) terephthalate are alcoholbased compounds including a hydroxyl group in the intra-molecular structure thereof, so that there may be another problem in that a side reaction with di(2-ethylhexyl) terephthalate, which is a target product, may even occur. Therefore, as a method for preparing di(2-ethylhexyl) terephthalate, almost every manufacturer uses a direct trans-esterification reaction of terephthalic acid and 2-ethylhexanol or a trans-esterification reaction of dimethyl terephthalate and 2-ethylhexanol, and does not use a method of utilizing PET as a raw material.

However, in the present invention, it has been confirmed that it is possible to provide a plasticizer composition having improved performance compared to a typical plasticizer product by focusing on a function of 2-ethylhexyl(2-hydroxyethyl) terephthalate, which is typically regarded as an impurity, and thus is a target to be removed, and allowing the 2-ethylhexyl(2-hydroxyethyl) terephthalate to be included in a predetermined amount in the plasticizer composition instead of removing the same. 2-ethylhexyl(2-hydroxyethyl) terephthalate is not easily separated from di(2-ethylhexyl) terephthalate, but serves to solve a problem of compression migration of the di(2-ethylhexyl) terephthalate, that is, the problem in which a plasticizer is discharged due to heat or pressure. Particularly, due to the presence of a hydroxy group in the intra-molecular structure, 2-ethylhexyl(2-hydroxyethyl) terephthalate may bond more firmly with a resin to be mixed, and may perform a role in holding di(2-ethylhexyl) terephthalate, which is a major component in the plasticizer composition, so as not to be discharged to the outside of the resin.

According to an embodiment of the present invention, the content of the 2-ethylhexyl(2-hydroxyethyl) terephthalate may be 20 wt% or less based on the total plasticizer composition. Illustratively, based on the total plasticizer composition, the content of the 2-ethylhexyl(2-hydroxyethyl) terephthalate may be 0.01 wt% or greater, 0.05 wt% or greater, 0.06 wt% or greater, 0.08 wt% or greater, 0.10 wt% or greater, 0.50 wt% or greater, 1.0 wt% or greater, 2.0 wt% or greater, 3.0 wt% or greater, 4.0 wt% or greater, 4.5 wt% or greater, 4.9 wt% or greater, 5.0 wt% or greater, 5.5 wt% or greater, 7.5 wt% or greater, 8.0 wt% or greater, 20.0 wt% or less, 19.5 wt% or less, 19.0 wt% or less, 18.0 wt% or less, 17.0 wt% or less, 16.0 wt% or less, 15.0 wt% or less, 14.9 wt% or less, 14.5 wt% or less, 13.0 wt% or less, 12.8 wt% or less, 12.5 wt% or less, 12.4 wt% or less, 12.0 wt% or less, 11.7 wt% or less, 11.5 wt% or less, 11.3 wt% or less, 11.0 wt% or less, 10.5 wt% or less, 10.0 wt% or less, 9.5 wt% or less, 9.3 wt% or less, 8.5 wt% or less, 8.0 wt% or less, 7.5 wt% or less, 7.2 wt% or less, 7.0 wt% or less, 6.5 wt% or less, 6.0 wt% or less, 5.5 wt% or less, 5.0 wt% or less, 4.5 wt% or less, 4.0 wt% or less, 3.5 wt% or less, 3.0 wt% or less, 2.5 wt% or less, or 2.0 wt% or less. Preferably, the content of terephthalate may be 0.01 wt% to 15 wt% based on the total plasticizer composition. In addition, the weight ratio between the 2-ethylhexyl(2-hydroxyethyl) terephthalate and the di(2-ethylhexyl) terephthalate may be 1:3 to 10000, preferably 1:5 to 1:2000 or 1:5 to 1:1000. When the content of 2-ethylhexyl(2-hydroxyethyl) terephthalate in the plasticizer composition is too small, the above-described effect of improving migration resistance of 2-ethylhexyl(2-hydroxyethyl) terephthalate may be insignificant, and on the contrary, when the content of 2-ethylhexyl(2-hydroxyethyl) terephthalate is excessively large, the content of di(2-ethylhexyl) terephthalate becomes relatively small, so that the volatile loss becomes poor, and the absorption rate increases excessively, which may cause the blending with the resin and the process conditions for finished products to be unstable, and accordingly, the overall heat resistance of a resin composition or a finished product obtained from the resin composition may be degraded. Particularly, when the 2-ethylhexyl(2-hydroxyethyl) terephthalate is included as a main component in the plasticizer composition, it may be difficult to blend with a resin due to the molecular weight of 2-ethylhexyl(2-hydroxyethyl) terephthalate which is relatively low, and a rolling process or the like after the blending may not be smoothly performed. When the content of 2-ethylhexyl(2-hydroxyethyl) terephthalate satisfies the above-described preferred range, an appropriate volatile loss and an appropriate absorption rate may be implemented, so that it is possible to provide a plasticizer composition which has excellent heat resistance and which may be stably blended with a resin composition.

According to an embodiment of the present invention, the plasticizer composition of the present invention may further include one or more among dimer compounds represented by Formulas 1 to 3 below.

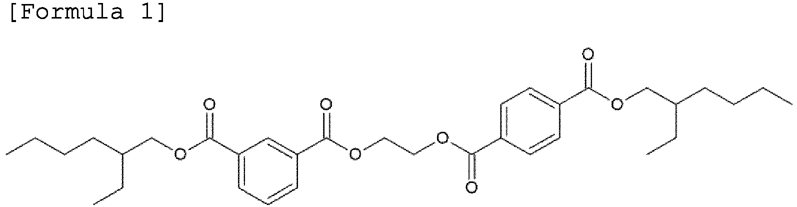

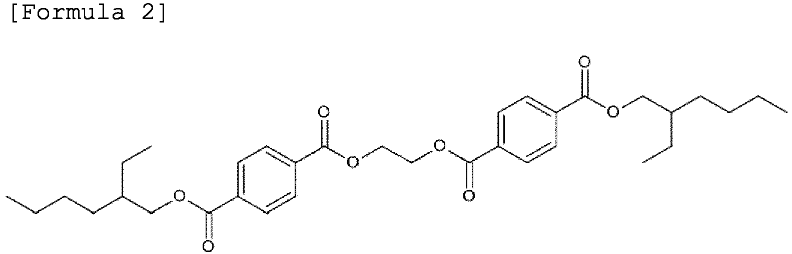

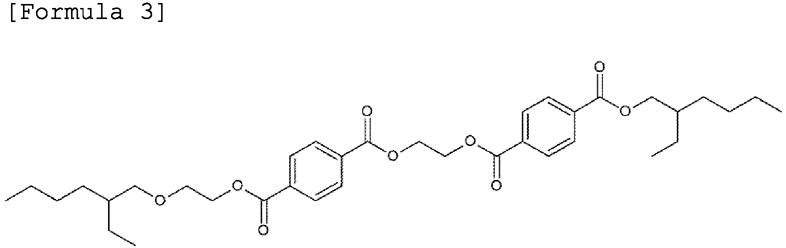

In the present invention, like the above-described 2-ethylhexyl(2-hydroxyethyl) terephthalate, a dimer compound, which is one of by-products, having a (terephthalate or isophthalate) - (ethylene glycol) - (terephthalate or isophthalate) structure is controlled to be included in a predetermined content in the plasticizer composition, so that it has been confirmed that it is possible to provide a plasticizer composition having improved performance compared to a typical plasticizer product. The isophthalate may be produced because of the reason that recycled polyethylene terephthalate (PET) is used as a raw material during a preparation process of the plasticizer composition, and highpurity isophthalic acid used in a small amount when preparing the PET remains.

Such dimer compounds may be prepared in various forms and contents depending on the reaction time used or many reaction conditions in a depolymerization process of PET, and since compounds having such a structure are included together with a terephthalate-based plasticizer in the plasticizer composition, it is possible to complement the compression migration of a typical terephthalate-based plasticizer.

For example, in a process in which di(2-ethylhexyl) terephthalate, which is a monomer, is synthesized by a reaction between 2-ethylhexanol and PET, a dimer compound in which 2-ethylhexanol is bonded to each terminal of two terephthalic acids may be generated, and the dimer compound may be included in a final plasticizer composition.

The process of forming a dimer compound described above may be an example, and in addition to the formation process described above, dimer compounds in various combinations may be formed by various reactions between 2-ethylhexyl(2-hydroxyethyl) terephthalate and 2-ethylhexyl(2-hydroxyethyl) isophthalate.

In addition, the contents of the di(2-ethylhexyl) terephthalate, 2-ethylhexyl(2-hydroxyethyl) terephthalate, and the dimer compound may be controlled by intentionally controlling the trans-esterification reaction in the preparation method described above. Meanwhile, when reaction time is controlled during the trans-esterification reaction, a relatively large amount of by-products such as a trimer and/or tetramer compound as well as a dimer compound may be produced depending on the reaction time, and since the by-product maintains performance of final processing physical properties of the entire plasticizer composition of di(2-ethylhexyl) terephthalate and 2-ethylhexyl(2-hydroxyethyl) terephthalate at a usable level without degrading the performance, a reaction product including the above by-product may be used as a plasticizer composition as it is.

In addition, the content of the dimer compound may be determined according to the amount of a catalyst used in the preparation method, the amount of 2-ethylhexanol to be added, the reaction pressure and temperature, the reaction progression time, and the like, and particularly, as the amount of 2-ethylhexanol to be added is increased, the contents of the condensate and the dimer may be decreased. In the plasticizer composition provided by the present invention, the total content of the dimer compound in the composition may be 2.0 wt% to 20.0 wt%, and illustratively, the total content of the dimer compound in the composition may be 2.0 wt% or greater, 3.0 wt% or greater, 4.0 wt% or greater, 5.0 wt% or greater, 6.0 wt% or greater, 7.0 wt% or greater, 8.0 wt% or greater, 20.0 wt% or less, 19.0 wt% or less, 18.0 wt% or less, 17.0 wt% or less, 16.0 wt% or less, 15.0 wt% or less, 14.0 wt% or less, 13.0 wt% or less, 12.0 wt% or less, or 10.0 wt% or less. Preferably, the total content of the dimer compound in the composition may be 2.0 wt% to 15.0 wt%. When the content of the dimer compound is controlled to be within the above-described range, it is possible to provide a plasticizer composition having migration resistance and volatile loss properties equal to or higher than those of a typical plasticizer product, and having excellent mechanical properties, such as tensile strength and tensile residual rate, and stress resistance.

In addition, the compounds represented by Formulas 1 to 3 above may be simultaneously present in the plasticizer composition. In the plasticizer composition provided by the present invention, the content of the dimer compound represented by Formula 1 above in the composition may be 0.01 wt% to 1 wt%, the content of the dimer compound represented by Formula 2 above therein may be 1.5 wt% to 17.0 wt%, and the content of the dimer compound represented by Formula 3 above therein may be 0.3 wt% to 2.5 wt%.

Specifically, the content of the dimer compound represented by Formula 1 above may be 0.01 wt% or greater, 0.02 wt% or greater, 0.03 wt% or greater, 0.04 wt% or greater, 0.05 wt% or greater, 0.10 wt% or greater, 0.20 wt% or greater, 0.40 wt% or greater, 1.0 wt% or less, 0.90 wt% or less, 0.80 wt% or less, 0.70 wt% or less, 0.60 wt% or less, or 0.50 wt% or less.

In addition, specifically, the content of the dimer compound represented by Formula 2 above may be 1.5 wt% or greater, 1.7 wt% or greater, 1.8 wt% or greater, 2.0 wt% or greater, 2.5 wt% or greater, 2.7 wt% or greater, 3.0 wt% or greater, 3.5 wt% or greater, 3.7 wt% or greater, 4.0 wt% or greater, 5.0 wt% or greater, 17.0 wt% or less, 16.0 wt% or less, 15.0 wt% or less, 14.0 wt% or less, 13.0 wt% or less, 12.0 wt% or less, 11.0 wt% or less, 10.0 wt% or less, 9.0 wt% or less, 8.0 wt% or less, 7.0 wt% or less, or 6.0 wt% or less.

In addition, specifically, the content of the dimer compound represented by Formula 3 above may be 0.3 wt% or greater, 0.4 wt% or greater, 0.5 wt% or greater, 0.7 wt% or greater, 1.0 wt% or greater, 1.1 wt% or greater, 1.2 wt% or greater, 1.3 wt% or greater, 1.5 wt% or greater, 2.5 wt% or less, 2.4 wt% or less, 2.3 wt% or less, 2.1 wt% or less, 2.0 wt% or less, 1.7 wt% or less, 1.5 wt% or less, 1.3 wt% or less, 1.2 wt% or less, or 1.1 wt% or less.

When the content of each of the dimer compounds represented by Formulas 1 to 3 above satisfies the above-described range, it is possible to obtain an effect of improving migration resistance and volatile loss in processing properties with a resin.

In addition, the weight ratio between the dimer compound and 2-ethylhexyl(2-hydroxyethyl) terephthalate in the composition may be 1:0.001 to 5.0, and illustratively, 1:0.01 or greater, 0.02 or greater, 0.05 or greater, 0.1 or greater, 0.2 or greater, 0.5 or greater, 0.7 or greater, 1.0 or greater, 1.5 or greater, 5.0 or less, 4.7 or less, 4.5 or less, 4.2 or less, 4.0 or less, 3.7 or less, 3.5 or less, 3.2 or less, 3.0 or less, 2.7 or less, 2.5 or less, 2.3 or less, 2.0 or less, 1.7 or less, 1.5 or less, 1.2 or less, 1.0 or less, or 0.8 or less. Preferably, the weight ratio between the dimer compound and the 2-ethylhexyl(2-hydroxyethyl) terephthalate may be 1:0.01 to 0.8. When the weight ratio between the dimer compound and the 2-ethylhexyl(2-hydroxyethyl) terephthalate in the plasticizer composition satisfies the above range, the effect of improving migration resistance may be excellent, and the volatile loss and absorption rate may be excellent to smoothly perform blending with a resin and a rolling process after the blending, so that processing stability may increase.

In addition, the weight ratio between the dimer compound and di(2-ethylhexyl) terephthalate in the composition may be 1:2.0 to 99.0, and illustratively, 1:2.0 or greater, 2.5 or greater, 2.7 or greater, 3.0 or greater, 3.5 or greater, 4.0 or greater, 4.5 or greater, 5.0 or greater, 6.0 or greater, 7.0 or greater, 9.0 or greater, 10.0 or greater, 12.0 or greater, 15.0 or greater, 20.0 or greater, 25.0 or greater, 27.0 or greater, 30.0 or greater, 35.0 or greater, 99.0 or less, 95.0 or less, 92.0 or less, 90.0 or less, 85.0 or less, 80.0 or less, 75.0 or less, 70.0 or less, 65.0 or less, 60.0 or less, 55.0 or less, 50.0 or less, 45.0 or less, or 40.0 or less. Preferably, the weight ratio between the dimer compound and the di(2-ethylhexyl) terephthalate in the composition may be 1:2.7 to 45. When the ratio between the dimer compound and the di(2-ethylhexyl) terephthalate is within the above-described range, an effect of improving migration resistance implemented by including the dimer compound in the plasticizer composition may be maximized.

A method for hydrogenating the plasticizer composition of the present invention may be applied. The present invention may provide a plasticizer composition including 2-ethylhexyl(2-hydroxyethyl) cyclohexane-1,4-dicarboxylate and di(2-ethylhexyl) cyclohexane-1,4-dicarboxylate, wherein the content of the 2-ethylhexyl(2-hydroxyethyl) cyclohexane-1,4-dicarboxylate is 20 wt% or less based on the total plasticizer composition. In addition, the plasticizer composition may further include hydrides of dimer compounds represented by Formulas 1 to 3.

The plasticizer composition including 2-ethylhexyl(2-hydroxyethyl) cyclohexane-1,4-dicarboxylate and di(2-ethylhexyl) cyclohexane-1,4-dicarboxylate may be obtained by subjecting a product, which has been produced by a trans-esterification reaction between polyethylene terephthalate (hereinafter, PET) and 2-ethylhexanol, to a hydrogenation reaction, and the order of the trans-esterification reaction and the hydrogenation reaction may be reversed. The product includes 2-ethylhexyl(2-hydroxyethyl) terephthalate and di(2-ethylhexyl) terephthalate described above, and may further include the dimer compounds of Formulas 1 to 3.

The plasticizer composition may significantly improve migration and loss properties while removing environmental issues, and may implement a product having significantly improved light resistance and heat resistance compared to typical commercial products.

### Method for preparing plasticizer composition

The present invention provides a method for preparing the above-described plasticizer composition.

Specifically, the present invention includes a method for preparing a plasticizer composition, wherein the method includes a step of mixing polyethylene terephthalate and 2-ethylhexanol in the presence of a catalyst to perform a trans-esterification reaction, wherein a product of the trans-esterification reaction includes 2-ethylhexyl(2-hydroxyethyl) terephthalate and di(2-ethylhexyl) terephthalate. In addition, the product may further include any one or more among the dimer compounds represented by Formulas 1 to 3 described above.

The PET and the 2-ethylhexanol are converted into a composition including the two components through the trans-esterification reaction. Specifically, PET is represented by Formula a below.

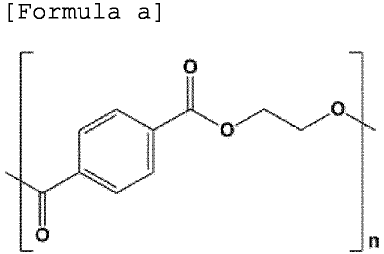

In the trans-esterification reaction of the PET and the 2-ethylhexanol, the 2-ethylhexanol reacts with an ester group present in the PET, thereby releasing a polymerization chain of the PET, and depending on how the reaction is controlled, the ratio of the two components may be controlled, and it is important to control not only the ratio of the two components but also the ratio of the dimer compound to the above-described ranges.

The PET may be included in an amount of 80 wt% or less, preferably 60 wt% or less, more preferably 50 wt%, 40 wt%, or 35 wt% or less, based on the sum of contents of the PET and the 2-ethylhexanol. When the content of the PET is within the above range, the amount of 2-ethylhexanol added is sufficient, so that side reactions may be minimized, and a desired trans-esterification reaction between the PET and the 2-ethylhexanol may be maximized. Particularly, when the content of the PET is within the above-described range, a composition obtained through the preparation process satisfies the above-described preferred content conditions, so that there is an advantage in that a plasticizer composition with excellent physical properties may be directly prepared while minimizing posttreatment after the preparation process.

Meanwhile, the PET may include 50 wt% or more of waste PET, preferably 60 wt% or more, and more preferably 70 wt% or more. Even if waste PET is used, the component ratio in a final product is not changed, so that it is possible to use waste PET in the entire amount as long as it is possible to control the color or content of impurities of a plasticizer. Since waste PET is used as described above, cost competitiveness is very excellent compared to di(2-ethylhexyl) terephthalate produced from terephthalic acid or dimethyl terephthalate, and the consumption of energy used in preparing terephthalic acid or dimethyl terephthalate may be reduced and environmental pollution may be prevented, thereby making a significant contribution to environmental improvement.

In the preparation method according to an embodiment of the present invention, by-products generated during the reaction, for example, ethylene glycol, may be recovered to the outside the system, wherein some thereof may remain in the reaction system. When some of ethylene glycol remains in the reaction system so as to participate in the reaction, an appropriate level of 2-ethylhexyl(2-hydroxyethyl) terephthalate and dimer compounds of Formulas 1 to 3 above may be formed from the ethylene glycol which remains in the reaction system, and since the 2-ethylhexyl(2-hydroxyethyl) terephthalate and the dimer compounds of Formulas 1 to 3 contribute to the improvement of the performance of a plasticizer composition, there is no need to consume separate energy to remove the formed 2-ethylhexyl(2-hydroxyethyl) terephthalate and the dimer compounds of Formulas 1 to 3, so that it is possible to operate the preparation process economically. Particularly, since ethylene glycol is used as a reactant for forming the 2-ethylhexyl(2-hydroxyethyl) terephthalate and the dimer compounds of Formulas 1 to 3, the content of ethylene glycol in a final composition is also naturally extremely lowered, so that there is an advantage in that a separation process may be simplified.

An example of the catalyst may be one or more selected from an acid catalyst such as sulfuric acid, hydrochloric acid, phosphoric acid, nitric acid, paratoluenesulfonic acid, methanesulfonic acid, ethanesulfonic acid, propanesulfonic acid, butanesulfonic acid, and alkyl sulfuric acid; a metal salt such as aluminum lactate, lithium fluoride, potassium chloride, cesium chloride, calcium chloride, iron chloride, and phosphoric acid, a metal oxide such as heteropoly acid, a natural/synthetic zeolite, cation and anion exchange resins, a catalyst including a choline compound such as choline hydroxide, choline bicarbonate, choline chloride, choline hydrogen stannate, choline dihydrogen citrate, and choline sulfate; an organic metal such as an alkyl titanate such as tetra alkyl titanate or a polymer thereof; and an organic metal including zirconium or tin. Preferably, the catalyst may be tetraalkyl titanate.

The amount of a catalyst to be used may vary depending on the type thereof, and as an example, a homogeneous catalyst may be in an amount range of 0.01 wt% to 5 wt%, 0.01 wt% to 3 wt%, 1 wt% to 5 wt%, or 2 wt% to 4 wt% based on 100 wt% of a reactant, and a heterogeneous catalyst may be in an amount range of 5 wt% to 200 wt%, 5 wt% to 100 wt%, 20 wt% to 200 wt%, or 20 wt% to 150 wt% based on the total weight of the reactant.

According to an embodiment of the present invention, it is preferable that the trans-esterification reaction is performed at a reaction temperature of 120 °C to 240 °C, preferably 135 °C to 230 °C, and more preferably 141 °C to 220 °C for 10 minutes to 12 hours, preferably 30 minutes to 10 hours, and more preferably 1 to 8 hours. The composition ratio of a final plasticizer composition may be efficiently controlled within the above temperature and time ranges. At this time, the reaction time may be calculated from when the temperature of a reactant is raised until when a reaction temperature is reached.

In addition, the method may further include a step of removing unreacted 2-ethylhexanol and ethylene glycol, which is a reaction by-product, after the trans-esterification reaction is completed. Since ethylene glycol has high solubility with respect to water, the ethylene glycol may be removed through neutralization and washing with water processes after the completion of the reaction, and residual 2-ethylhexanol may be removed through extractive distillation after the neutralization and the washing with water. Through the above step, a plasticizer composition satisfying a desired component and composition ratio may be prepared.

According to another embodiment of the present invention, a resin composition including the aforementioned plasticizer composition and a resin is provided.

As the resin, a resin commonly known in the art may be used. For example, a mixture of one or more selected from the group consisting of a straight vinyl chloride polymer, a paste vinyl chloride polymer, an ethylene vinyl acetate copolymer, an ethylene polymer, a propylene polymer, polyketone, polystyrene, polyurethane, polylactic acid, natural rubber, synthetic rubber, and a thermoplastic elastomer, and the like may be used as the resin. However, the present invention is not limited thereto.

The plasticizer composition may be included in an amount of 5 to 150 parts by weight, preferably 5 to 130 parts by weight, or 10 to 120 parts by weight based on 100 parts by weight of the resin.

In general, a resin in which a plasticizer composition is used may be manufactured as a resin product through melting processing or plastisol processing, and a melting processed resin and a plastisol processed resin may be produced differently depending on each polymerization method.

For example, when the vinyl chloride polymer is used for melt processing, solid resin particles produced by suspension polymerization and the like, thereby having a large average particle diameter are used, and such vinyl chloride polymer is referred to as a straight vinyl chloride polymer. When used for plastisol processing, a sol-like resin having fine resin particles produced by emulsion polymerization, and the like is used, and such vinyl chloride polymer is referred to as a paste vinyl chloride resin.

At this time, in the case of the straight vinyl chloride polymer, a plasticizer is preferably included in the range of 5 to 80 parts by weight based on 100 parts by weight of the polymer, and in the case of the paste vinyl chloride polymer, a plasticizer is preferably included in the range of 40 to 120 parts by weight based on 100 parts by weight of the polymer.

The resin composition may further include a filler. The filler may be 0 to 300 parts by weight based on 100 parts by weight of the resin, preferably 50 to 200 parts by weight, and more preferably 100 to 200 parts by weight.

The filler may be a filler known in the art, and is not particularly limited. For example, the filler may be a mixture of one or more selected from silica, magnesium carbonate, calcium carbonate, hard coal, talc, magnesium hydroxide, titanium dioxide, magnesium oxide, calcium hydroxide, aluminum hydroxide, aluminum silicate, magnesium silicate, and barium sulfate.

In addition, the resin composition may further include other additives such as a stabilizer, if necessary. Other additives such as the stabilizer may be 0 to 20 parts by weight based on 100 parts by weight of the resin, preferably 1 to 15 parts by weight.

The stabilizer may be, for example, a calcium-zinc-based (Ca-Zn-based) stabilizer such as a complex stearic acid salt of calcium-zinc, or a barium-zinc-based (Ba-Zn based) stabilizer, but is not particularly limited thereto.

As described above, the resin composition may be applied to both melting processing and plastisol processing. For example, car-rendering processing, extrusion processing, or injection processing may be applied as the melting processing, and coating processing or the like may be applied as the plastisol processing.

### Examples

Hereinafter, the present invention will be described in detail with reference to examples. However, the embodiments according to the present invention may be modified into other various forms, and the scope of the present invention should not be construed as being limited to the embodiments described below. The embodiments of the present invention are provided to more fully describe the present invention to those skilled in the art.

### Example 1

1.5 g of a catalyst, which is TnBT, 500 g of discarded polyethylene terephthalate, and 1220 g of 2-ethylhexanol were added to a reactor in which a stirrer, a condenser, and a decanter were installed, and then subjected to a trans-esterification reaction at a reaction temperature of 150 °C to 230 °C under a nitrogen atmosphere for 3 hours to 8 hours. After the completion of the reaction, unreacted 2-ethylhexanol was removed by decompression. Thereafter, 100 g of a 3 wt% sodium hydroxide aqueous solution was added to neutralize the catalyst, and a small amount of unreacted 2-ethylhexanol was removed by distillation. Through the above process, a composition including 12.4 wt% of 2-ethylhexyl (2-hydroxyethyl) terephthalate and 71 wt% of di(2-ethylhexyl) terephthalate (DEHTP) were obtained. The remaining components excluding the two components in the composition included a by-product generated during the reaction process, and the by-product included a dimer compound in the content shown in Table 1 below.

### Example 2

A composition including 2-ethylhexyl (2-hydroxyethyl) terephthalate and di(2-ethylhexyl) terephthalate (DEHTP) in 7.2 wt% and 78.5 wt% respectively was obtained in the same manner as in Example 1, through controlling the input amount and reaction time of 2-ethylhexanol. The remaining components excluding the two components in the composition included a by-product generated during the reaction process, and the by-product included a dimer compound in the content shown in Table 1 below.

### Example 3

A composition including 2-ethylhexyl (2-hydroxyethyl) terephthalate and di(2-ethylhexyl) terephthalate (DEHTP) in 4.9 wt% and 90.3 wt% respectively was obtained in the same manner as in Example 1, through controlling the input amount and reaction time of 2-ethylhexanol. The remaining components excluding the two components in the composition included a by-product generated during the reaction process, and the by-product included a dimer compound in the content shown in Table 1 below.

### Example 4

A composition including 2-ethylhexyl (2-hydroxyethyl) terephthalate and di(2-ethylhexyl) terephthalate (DEHTP) in 0.06 wt% and 95.8 wt% respectively was obtained in the same manner as in Example 1, through controlling the input amount and reaction time of 2-ethylhexanol. The remaining components excluding the two components in the composition included a by-product generated during the reaction process, and the by-product included a dimer compound in the content shown in Table 1 below.

### Example 5

A composition including (2-ethylhexyl 2-hydroxyethyl) terephthalate and di(2-ethylhexyl) terephthalate (DEHTP) in 19.1 wt% and 58.9 wt% respectively was obtained in the same manner as in Example 1, through controlling the input amount and reaction time of 2-ethylhexanol. The remaining components excluding the two components in the composition included a by-product generated during the reaction process, and the by-product included a dimer compound in the content shown in Table 1 below.

### Comparative Example 1

Di(2-ethylhexyl) phthalate (DEHP), a product of LG Chem, was used as a plasticizer composition.

### Comparative Example 2

A composition including 99.9 wt% of di(2-ethylhexyl) terephthalate (DEHTP) was obtained in the same manner as in Example 1, except that 1400 g of 2-ethylhexanol was added to remove all of 2-ethylhexyl (2-hydroxyethyl) terephthalate in the composition.

### Comparative Example 3

A composition not including 2-ethylhexyl (2-hydroxyethyl) terephthalate, and including di(2-ethylhexyl) terephthalate (DEHTP) in 96.7 wt% was obtained in the same manner as in Example 1, through controlling the input amount and reaction time of 2-ethylhexanol. The remaining components excluding the two components in the composition included a by-product generated during the reaction process, and the by-product included a dimer compound in the content shown in Table 1 below.

### Comparative Example 4

A composition including 2-ethylhexyl (2-hydroxyethyl ) terephthalate and di(2-ethylhexyl) terephthalate (DEHTP) in 21.5 wt% and 55.2 wt% respectively was obtained in the same manner as in Example 1, through controlling the input amount and reaction time of 2-ethylhexanol. The remaining components excluding the two components in the composition included a by-product generated during the reaction process, and the by-product included a dimer compound in the content shown in Table 1 below.

**[Table 1]**

| Classificat ions | DOTP (wt%) | 2-ethylhexyl(2-hydroxyethyl) terephthalate (wt%) | By-product | | | | |
|---|---|---|---|---|---|---|---|
| | | | Dimer compound (wt%) | | | | Remainde rs (wt%) |
| | | | Chemical Formula 1 | Chemical Formula 2 | Chemical Formula 3 | Total sum of dimers | |
| Example 1 | 71 | 12.4 | 0.9 | 12.4 | 1.2 | 14.5 | 2.1 |
| Example 2 | 78.5 | 7.2 | 0.8 | 10.5 | 1 | 12.3 | 2 |
| Example 3 | 90.3 | 4.9 | 0.05 | 2.6 | 0.4 | 3.05 | 1.75 |
| Example 4 | 95.8 | 0.06 | 0.04 | 1.8 | 0.4 | 2.24 | 1.9 |
| Example 5 | 58.9 | 19.1 | 1 | 16.7 | 2.3 | 20 | 2 |
| Comparative Example 1 | DOP | | | | | | |
| Comparative Example 2 | DOTP | | | | | | |
| Comparative Example 3 | 96.7 | 0 | 0 | 1 | 0.2 | 1.2 | 2.1 |
| Comparative Example 4 | 55.2 | 21.5 | 1.1 | 18 | 2.6 | 21.7 | 1.5 |

### Experimental Example 1: Evaluation of sheet performance

Using the plasticizers from Examples and Comparative Examples, specimens were produced under the following prescription and production conditions in accordance with ASTM D638.
**(1) Prescription:** 100 parts by weight of a straight vinyl chloride polymer (LS100), 50 parts by weight of a plasticizer, and 3 parts by weight of a stabilizer (BZ-153T)
**(2) Blending:** Mixing at 700 rpm at 98°C
**(3) Producing specimen:** Working with a roll mill at 160 °C for 4 minutes and working with a press at 180 °C for 2.5 minutes (low pressure) and 2 minutes (high pressure) to produce 1T to 3T sheets
**(4) Evaluation items**
   1) Tensile strength By the ASTM D638 method, the 1T specimen was pulled at a cross head speed of 200 mm/min using a U.T.M (manufacturer; Instron, model name; 4466), which is a test device, and a point at which the 1T specimen was cut was measured. The tensile strength was calculated as follows. Tensile strength (kgf/cm2) = load value (kgf) / thickness (cm) x width (cm)
   2) Measurement of elongation rate: By the ASTM D638 method, the 1T specimen was pulled at a cross head speed of 200 mm/min using the U.T.M, and a point at which the 1T specimen was cut was measured, and the elongation rate was calculated as follows: Elongation rate (%) = length after elongation / initial length x 100
   3) Measurement of tension and elongation residual: The measurement of tensile and the measurement of elongation residual are to measure the tensile strength and the elongation rate remaining in a specimen after applying heat to 100 °C for 168 hours, and the measurement method is the same as the tensile strength and elongation measurement methods.
   4) Measurement of migration loss: The measurement was performed in accordance with KSM-3156. Specifically, a test piece having a thickness of 1 mm was obtained, and an absorption sheet capable of moving to both sides of the test piece, thereby absorbing an organic material discharged to the surface of the test piece was added, and then a plate which was able to cover the entire test body was attached thereon to apply a load of 1 kgf/cm². The test piece was left to stand for 72 hours in a hot-air circulation-type oven (80 °C), and then was taken out of the oven and cooled for 4 hours at room temperature. Thereafter, the plate and the absorption sheet attached to both sides of the test piece were removed, and then the weights of the specimen before and after the specimen was left in the oven were measured to calculate a migration loss amount by Equation 3 below. Migration loss (%) = {(initial weight of test specimen at room temperature - weight of test specimen after being left to stand in oven) / initial weight of test specimen at room temperature} x 100
   5) Measurement of volatile loss: After working on the produced specimen at 80 °C for 72 hours, the weight of the specimen was measured. Volatile loss (wt%) = initial specimen weight - (80 °C, specimen weight after 72 hours of work) / initial specimen weight x 100
   6) Stress test (stress resistance): A specimen with a thickness of 2 mm was bent and left to stand at 23 °C for 168 hours, and then the degree of migration (degree of leaking) was observed on the first day, the third day, and the seventh day, and the results were described in numerical values. The closer the numerical value is to 0, the better the stress resistance.
   7) Evaluation of carbonization properties: A specimen having a thickness of 0.25 mm was prepared in a size of 40 cm X 1 cm, and a carbonization test was performed thereon in a Mathis Oven at 230 °C at a rate of 5 mm/10 sec to measure the time at which black carbonization started. Excellent carbonization properties mean that carbonization started relatively late, and poor carbonization properties mean that carbonization started relatively early. The evaluation was represented on a scale of 1 to 5 according to the degree of excellence, with 5 being excellent and 1 being inferior.
   8) Measurement of absorption rate: Under the conditions of 73 °C and 60 rpm, processability was evaluated by measuring the time taken from when a resin and the plasticizer were mixed with each other using a planetarymixer (Brabender, P600) until when the torque of the mixer was stabilized.
**(5) Evaluation results**

The evaluation results of the items are shown in Tables 2 and 3 below.

**[Table 2]**

| Classificat ions | Migration loss (%) | Volatile loss (%) | Tensile strength (kgf/cm²) | Elongation (%) | Tensile residual rate | Elongation residual (%) |
|---|---|---|---|---|---|---|
| | | | | | (%) | |
| Example 1 | 5.11 | 0.94 | 210.9 | 324.8 | 108.2 | 89.9 |
| Example 2 | 5.78 | 0.90 | 210.9 | 325.4 | 104.2 | 89.0 |
| Example 3 | 5.86 | 0.92 | 210.1 | 324.5 | 102.1 | 89.0 |
| Example 4 | 5.88 | 0.88 | 211.4 | 326.2 | 105.6 | 89.5 |
| Example 5 | 5.23 | 0.95 | 208.7 | 320.1 | 104.8 | 88.9 |
| Comparative Example 1 | 3.21 | 2.34 | 200.3 | 310.2 | 89.6 | 87.4 |
| Comparative Example 2 | 6.54 | 0.90 | 207.3 | 320.4 | 104.2 | 89.1 |
| Comparative Example 3 | 6.36 | 0.98 | 208.1 | 320.3 | 101.2 | 88.9 |
| Comparative Example 4 | 5.34 | 1.23 | 198.5 | 310.2 | 98.6 | 82.3 |

**[Table 3]**

| Classifications | Stress test | | | Carbonization properties | Absorption rate (mm:ss) |
|---|---|---|---|---|---|
| | Day 1 | Day 3 | Day 7 | | |
| Example 1 | 0.5 | 1.5 | 1.5 | 2 | 6:30 |
| Example 2 | 0.5 | 1.5 | 1.5 | 2 | 6:55 |
| Example 3 | 1.0 | 1.5 | 2.0 | 2 | 7:05 |
| Example 4 | 1.0 | 1.5 | 2.0 | 2 | 7:25 |
| Example 5 | 1.0 | 1.5 | 1.5 | 2 | 6:15 |
| Comparative Example 1 | 1.0 | 2.0 | 2.5 | 4 | 5:30 |
| Comparative Example 2 | 1.0 | 2.0 | 2.5 | 2 | 7:30 |
| Comparative Example 3 | 1.0 | 2.0 | 2.5 | 2 | 7:40 |
| Comparative Example 4 | 0 | 1.5 | 1.5 | 3 | 6:20 |

Referring to Tables 2 and 3 above, compared to Comparative Example 1, which is a typical phthalate-based plasticizer product, Examples 1 to 5 showed excellent results in terms of volatile loss, mechanical properties, stress resistance, and carbonization properties. That is, it means that the plasticizer composition of the present invention applies di(2-ethylhexyl) terephthalate and 2-ethylhexyl(2-hydroxyethyl) terephthalate together, thereby showing improvement in stress resistance and mechanical properties without degradation in typical physical properties. In general, in the case of a composition in which two components are mixed, the effect of the mixed composition is manifested in the direction of the decrease in the effectiveness of each component, but on the contrary, in the present invention, an improvement in stress resistance and mechanical properties is achieved while maintaining the same level of physical properties as the existing physical properties, from which it can be confirmed that the present invention achieves an effect that cannot be predicted in the existing technologies.

Meanwhile, Comparative Example 2 was prepared from polyethylene terephthalate in a manner similar to that of Examples of the present invention, except that a larger amount of 2-ethylhexanol was used and 2-ethylhexyl(2-hydroxyethyl) terephthalate in a final composition was completely removed through an additional separation process, wherein the cost of the manufacturing process was higher than that of Examples 1 to 5, but the physical properties of the finally obtained plasticizer composition were similar to those of the plasticizer compositions of Examples 1 to 5, and in particular, the results of migration resistance, stress resistance, and mechanical properties were rather inferior to those of Examples. In addition, in terms of absorption rate, the results were inferior to those of Examples. From the above, it can be confirmed that the plasticizer composition of the present invention has a lower preparation cost than a typical plasticizer composition including di(2-ethylhexyl) terephthalate recovered from polyethylene terephthalate, and also has an excellent function of a plasticizer as it is.

Meanwhile, Comparative Examples 3 and 4 were prepared from polyethylene terephthalate in a manner similar to that of Examples of the present invention, and is a plasticizer composition having a content out of the content of 2-ethylhexyl(2-hydroxyethyl) terephthalate and/or a dimer compound according to the present invention by controlling the input amount, reaction time, and purification process of 2-ethylhexanol, wherein the results of mechanical properties, migration loss, volatile loss, and stress resistance were inferior to those of Examples above. From the above, it can be confirmed that the plasticizer composition of the present invention, in which the content of each compound was limited in order to maximize the improvement in various physical properties such as mechanical properties, heat resistance, and migration resistance, has an excellent function of a plasticizer as it is compared to the plasticizers of Comparative Examples 2 and 3 out of the content of 2-ethylhexyl(2-hydroxyethyl) terephthalate and/or a dimer compound.

## Claims

1. A plasticizer composition comprising2-ethylhexyl(2-hydroxyethyl) terephthalate and di(2-ethylhexyl) terephthalate,
wherein the content of the 2-ethylhexyl(2-hydroxyethyl) terephthalate is 20 wt% or less based on the total plasticizer composition.

2. The plasticizer composition of claim 1, wherein the content of 2-ethylhexyl(2-hydroxyethyl) terephthalate is 0.01 wt% to 15 wt%.

3. The plasticizer composition of claim 1, wherein the weight ratio between the 2-ethylhexyl(2-hydroxyethyl) terephthalate and the di(2-ethylhexyl) terephthalate is 1:3 to 10000.

4. The plasticizer composition of claim 3, wherein the weight ratio between the 2-ethylhexyl(2-hydroxyethyl) terephthalate and the di(2-ethylhexyl) terephthalate is 1:5 to 1000.

5. The plasticizer composition of claim 1, further comprising any one or more among dimer compounds represented by Formulas 1 to 3 below:

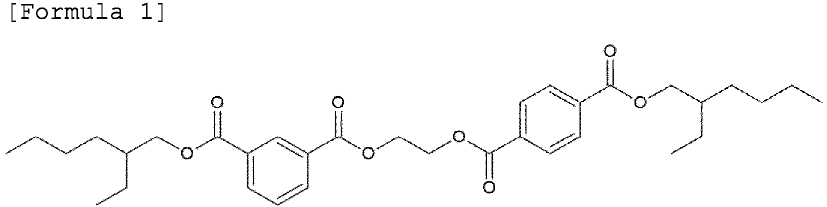

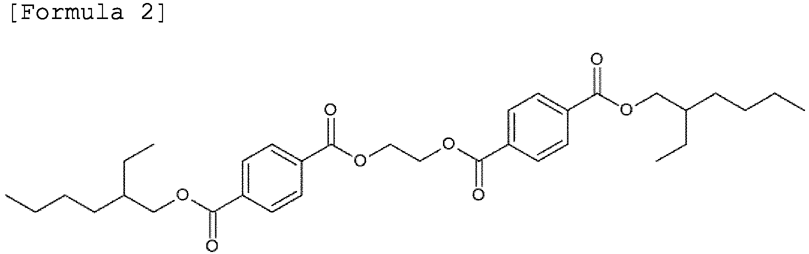

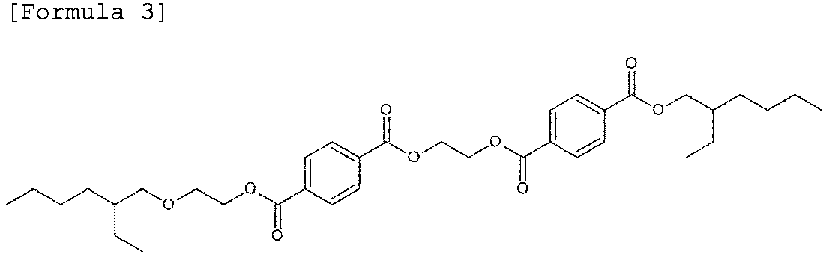

6. The plasticizer composition of claim 5, wherein the total content of the dimer compound in the composition is 2.0 wt% to 20.0 wt%.

7. The plasticizer composition of claim 5, wherein the content of the dimer compound represented by Formula 1 above in the composition is 0.01 wt% to 1 wt%.

8. The plasticizer composition of claim 5, wherein the content of the dimer compound represented by Formula 3 above in the composition is 0.3 wt% to 2.5 wt%.

9. The plasticizer composition of claim 5, wherein the weight ratio between the dimer compound and the 2-ethylhexyl(2-hydroxyethyl) terephthalate in the composition is 1:0.001 to 5.

10. The plasticizer composition of claim 5, wherein the weight ratio between the dimer compound and the di(2-ethylhexyl) terephthalate in the composition is 1:2.0 to 99.0.

11. A method for preparing a plasticizer composition, the method comprising a step of mixing polyethylene terephthalate and 2-ethylhexanol in the presence of a catalyst to perform a trans-esterification reaction,
wherein a product of the trans-esterification reaction includes 2-ethylhexyl(2-hydroxyethyl) terephthalate and di(2-ethylhexyl) terephthalate.

12. The method of claim 11, wherein the polyethylene terephthalate is mixed in an amount of 80 wt% or less with respect to the sum of contents of polyethylene terephthalate and 2-ethylhexanol.

13. The method of claim 11, wherein the polyethylene terephthalate comprises discarded and recycled polyethylene terephthalate.

14. A resin composition comprises: 100 parts by weight of a resin; and 5 parts by weight to 150 parts by weight of the plasticizer composition of claim 1.

15. The resin composition of claim 14, wherein the resin is one or more selected from the group consisting of a straight vinyl chloride polymer, a paste vinyl chloride polymer, an ethylene vinyl acetate copolymer, an ethylene polymer, a propylene polymer, polyketone, polystyrene, polyurethane, polylactic acid, natural, and synthetic rubber.
